# EUROPÄISCHE PATENTSCHRIFT

(11) **EP 3 160 674 B1**
(45) Veröffentlichungstag und Bekanntmachung des Hinweises auf die Patenterteilung: **20.06.2018**
(21) Anmeldenummer: 15707620.9
(22) Anmeldetag: 02.03.2015
(51) Int. Cl.: B23K 5/22, B23K 7/10

(54) **SCHWEISS- ODER SCHNEIDWERKZEUG**
WELDING OR CUTTING TOOL
OUTIL DE DÉCOUPAGE ET DE SOUDAGE

(30) Priorität: 26.06.2014 DE 102014009308
(43) Veröffentlichungstag der Anmeldung: 03.05.2017
(73) Patentinhaber: IHT Automation GmbH & Co. KG, 76532 Baden-Baden (DE)
(72) Erfinder: NACHBARGAUER, Kurt, 76532 Baden-Baden (DE)
(74) Vertreter: Patentanwälte Bregenzer und Reule Partnerschaftsgesellschaft mbB
(86) Internationale Anmeldenummer: PCT/EP2015/054281
(87) Internationale Veröffentlichungsnummer: WO 2015/197204

(56) Entgegenhaltungen:
- DE-A1-102009 014 947
- DE-A1-102009 039 857

## Beschreibung

Die Erfindung betrifft ein Schweiß- oder Schneidwerkzeug gemäß Oberbegriff des Anspruchs 1.

Ein als Schneidbrenner ausgebildetes Werkzeug der eingangs genannten Art ist aus der DE 10 2009 039 857 A1 bekannt. Dieser vorbekannte Schneidbrenner weist eine Düsenkappe auf, die eine eine Elektrode bildende Metallkappe sowie einen mit der Metallkappe verbundenen Isolierring aus Keramik aufweist. Der Isolierring isoliert die Metallkappe von den übrigen Bauteilen des Schneidbrenners, so dass die Metallkappe mit einem zu bearbeitenden elektrisch leitenden Werkstück eine messbare Kapazität bildet, die vom gegenseitigen Abstand abhängig ist. Zur Bestimmung des Abstands der Brennerspitze zum Werkstück wird die Kapazität bzw. eine die Kapazität charakterisierende Kenngröße in regelmäßigen zeitlichen Abständen gemessen, und aus den erhaltenen Werten wird der Abstand der Metallkappe zum Werkstück errechnet. Aus diesem Abstand lässt sich dann der Abstand der Brennerspitze zum Werkstück errechnen. Diese Abstandsmessung hat sich in der Praxis bereits hervorragend bewährt. Es ist jedoch aufwendig und daher teuer, die metallene Elektrode in das Keramikmaterial des Isolierrings einzupassen.

Es ist daher Aufgabe der Erfindung, ein Schweiß- oder Schneidwerkzeug der eingangs genannten Art derart weiterzubilden, dass es günstiger zu fertigen ist.

Diese Aufgabe wird erfindungsgemäß durch ein Schweiß- oder Schneidwerkzeug mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass ein elektrisch leitendes Keramikmaterial einfacher mit einem elektrisch nicht leitenden Keramikmaterial verbunden werden kann als ein Metallstück. Eine solche Verbindung ist sehr gut in einem Zweikomponentenkeramikspritzverfahren realisierbar, wobei in einem ersten Verfahrensschritt der Rohstoff für das die Elektrode bildende erste Keramikmaterial in eine Spritzform eingebracht wird und in einem zweiten Verfahrensschrift der Rohstoff für das das Isolierelement bildende zweite Keramikmaterial in die Spritzform eingebracht wird. Das so erhaltene einstückige halbfertige Produkt wird dann aus der Spritzform entnommen und in einem Brennprozess zur fertigen Düsenkappe gebrannt. Es ist jedoch auch möglich, dass der Rohstoff für das die Elektrode bildende Keramikmaterial in eine erste Spritzform und der Rohstoff für das das Isolierelement bildende zweite Keramikmaterial in eine zweite Spritzform eingebracht wird und dass die so erhaltenen halbfertigen Produkte (halbfertige Elektrode und halbfertiges Isolierelement) aus den Spritzformen entnommen und in einem gemeinsamen Brennprozess zusammengefügt werden. Dabei kommt für das erste, elektrisch leitende Keramikmaterial insbesondere Titannitrid oder eine Titannitrid aufweisende Keramik in Frage. So wurde in Untersuchungen herausgefunden, dass eine aus einem Gemisch aus Titannitrid und Aluminiumoxid bestehende Keramik dann metallisch leitend ist, wenn der Anteil des Titannitrid mindestens 18 vol.-% beträgt. Mit zunehmendem Anteil an Titannitrid nimmt auch die Leitfähigkeit zu. Das zweite, elektrisch isolierende Keramikmaterial ist vorzugsweise Aluminiumoxid.

Zweckmäßig weist die Düsenkappe ein Kontaktelement auf, das die Elektrode mit einem elektrischen Anschluss einer Auswerteelektronik elektrisch leitend verbindet. Das Kontaktelement kann aus Metall bestehen. Es wird jedoch bevorzugt, dass es aus dem ersten Keramikmaterial besteht und dabei einstückig mit der Elektrode und dem Isolierelement ausgebildet sein kann. Dabei ist es insbesondere möglich, dass zur Herstellung des Kontaktelements vor dem Entnehmen des halbfertigen Produkts aus der Spritzform in einem weiteren Verfahrensschritt der Rohstoff für das das Kontaktelement bildende erste Keramikmaterial in die Spritzform bzw. in die Spritzform für das Isolierelement eingebracht wird. Vorteilhaft ist das Kontaktelement als Folienstreifen mit einer Dicke von maximal 0,2 mm, vorzugsweise von maximal 0,1 mm, also mit einer Dicke, die der Dicke eines Blatts Papier entspricht, ausgebildet. Eine solche Folie kann aus Keramikmaterial gezogen und dann in Streifen geschnitten werden. Zweckmäßig ist das Kontaktelement in das Isolierelement eingebettet.

Vorteilhaft erstreckt sich das Kontaktelement über einen quer zu einer Werkzeuglängsachse verlaufenden Absatz am Isolierelement und kontaktiert dort den Anschluss der Auswerteelektronik. Insbesondere dann, wenn das Kontaktelement in das Isolierelement eingebettet ist, kann es vorteilhaft am Absatz aus dem Isolierelement herausragen und dort zur flächigen Anlage am Absatz umgebogen sein. An einem quer zur Werkzeuglängsachse verlaufenden Absatz ist der Kontakt vor hochspritzenden Schlackepartikeln geschützt, die bei einer Anlagerung am Kontaktelement die Kontaktierung mit dem Anschluss der Auswerteelektronik verhindern und die Elektrode unbrauchbar machen.

Gemäß einer alternativen Ausführungsform ist das Kontaktelement auf einer der Düse zugewandten Innenfläche des Isolierelements angeordnet. Dies vereinfacht die Anbringung des Kontaktelements am Isolierelement. Die Elektrode weist zudem vorzugsweise eine der Düse abgewandte Außenfläche in Form einer Kugelkalotte auf mit einer mittig angeordneten Austrittsöffnung. Dabei wird besonders bevorzugt, dass die Elektrode die Form eines Segments einer Kugelschale aufweist mit mittig angeordneter Austrittsöffnung. Es hat sich gezeigt, dass diese Geometrie der Elektrode besonders vorteilhaft ist, da ein leichtes Verkippen der Werkzeuglängsachse gegenüber der Werkstückoberfläche sich nur wenig auf das Messergebnis auswirkt.

Die Erfindung betrifft in erster Linie Schweiß- oder Schneidbrenner. Ein erfindungsgemäßes Werkzeug kann aber auch ein Laser-, Plasma- oder Wasserstrahlschneidgerät sein.

Im Folgenden wird die Erfindung anhand eines in der Zeichnung schematisch dargestellten Ausführungsbeispiels näher erläutert. Es zeigen
- Fig. 1: einen Schneidbrenner im Längsschnitt und
- Fig. 2: eine vergrößerte Darstellung des die Brennerspitze aufweisenden vorderen Bereichs des Schneidbrenners gemäß Fig. 1 im Längs-schnitt.

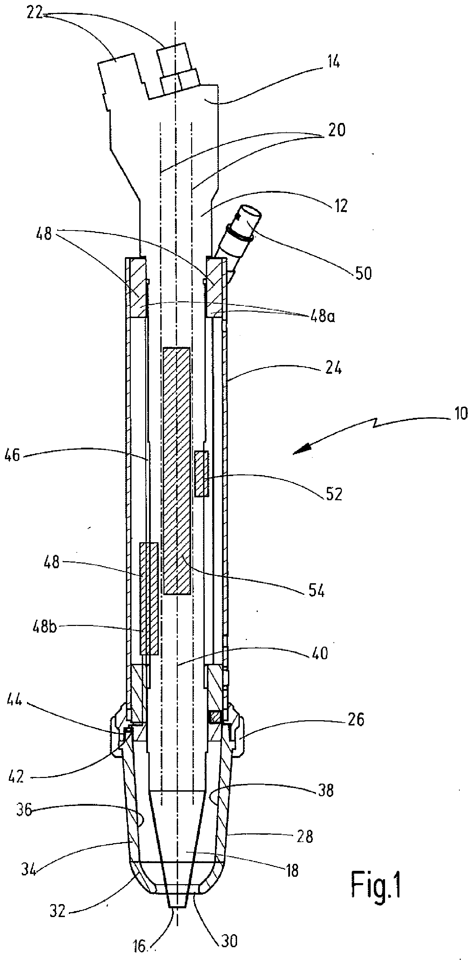

Der in Fig. 1 gezeigte Schneidbrenner 10 weist einen Brennerkörper 12 auf, der sich von einem Anschlussteil 14 in einer Längsrichtung bis zu einer die Brennerspitze 16 bildenden Brennerdüse 18 erstreckt, die an ihm befestigt ist. Der Brennerkörper 12 weist sich in Längsrichtung vom Anschlussteil 14 zur Brennerdüse 18 erstreckende, in Fig. 1 nur gestrichelt angedeutete Gaszufuhrleitungen 20 auf, die über Anschlussflansche 22 mit einer Gasversorgungseinrichtung verbunden werden können. Auf den Brennerkörper 12 ist ein Mantelrohr 24 aus Metall aufgeschoben, das ihn über den Großteil seiner Länge rings umschließt und sowohl im Abstand zum Anschlussteil 14 als auch im Abstand zur Brennerdüse 18 endet. Mittels einer Überwurfmutter 26 ist eine Düsenkappe 28 am Mantelrohr 24 befestigt, die das düsenseitige Ende des Brennerkörpers 12 sowie einen Großteil der Brennerdüse 18 rings umschließt und eine mittige Austrittsöffnung 30 aufweist, aus der die die Brennerspitze 16 bildende Spitze der Brennerdüse 18 ein Stück weit herausragt.

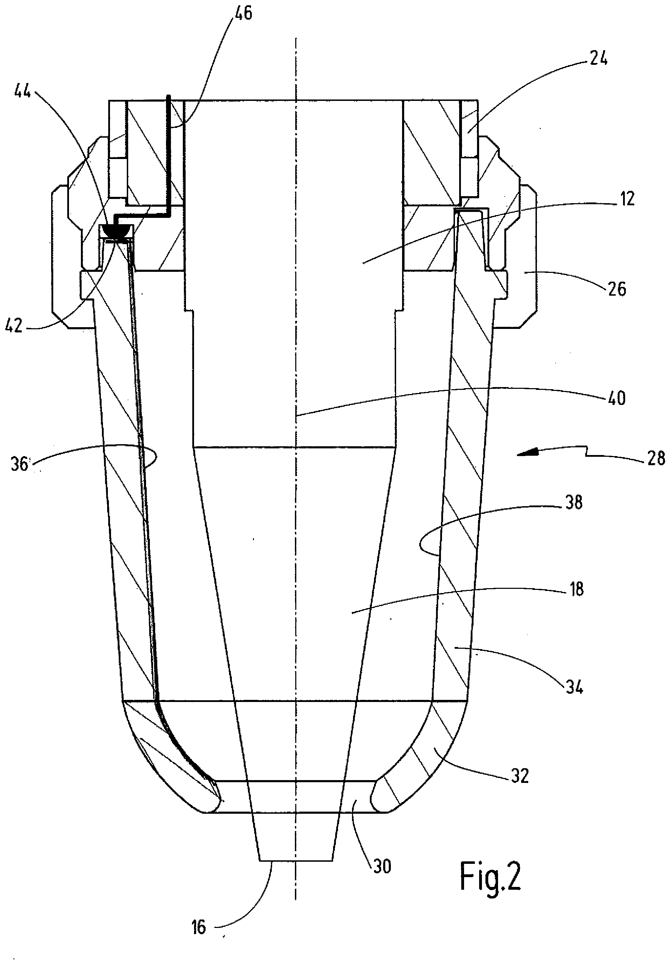

Die Düsenkappe 28 (Fig. 2) weist einen keramischen Grundkörper auf, der einstückig aus zwei Keramikmaterialien gefertigt ist. Dabei ist eine die Form eines Segments einer Kugelschale aufweisende, mit der Austrittsöffnung 30 versehene Elektrode 32 aus einem elektrisch leitenden ersten Keramikmaterial, insbesondere aus Titannitrid oder aus einem Gemisch aus Titannitrid und Aluminiumoxid, gefertigt, während ein mittels der Überwurfmutter 26 am Mantelrohr 24 befestigtes, einstückig mit der Elektrode 32 verbundenes Isolierelement 34 aus einem elektrisch isolierenden zweiten Keramikmaterial, im vorliegenden Fall aus Aluminiumoxid, gefertigt ist. Von der Elektrode 32 verläuft ein ebenfalls aus dem ersten Keramikmaterial bestehendes Kontaktelement 36 über eine der Brennerdüse 18 zugewandte Innenfläche 38 des Isolierelements 34 bis zu einem sich senkrecht zur Brennerlängsachse 40 erstreckenden Absatz 42 des Isolierelements 34, wo es durch einen elektrischen Anschluss 44 aus Metall kontaktiert wird. Alternativ ist es aber auch möglich, das Kontaktelement 36 in das Isolierelement 34 einzubetten, so dass es keinen Umwelteinflüssen ausgesetzt ist. Es kann dann, ähnlich wie in Fig. 2 gezeigt, am Absatz 42 aus dem Isolierelement 34 ragen und dort zur Herstellung des Kontakts mit dem elektrischen Anschluss 44 umgebogen sein. Am anderen Ende ist es möglich, das Kontaktelement 34 entweder in die Elektrode 32 einzubetten oder aber ebenfalls einen aus dem Isolierelement 34 ragenden Abschnitt umzubiegen, so dass er an der Elektrode 32 anliegt. Diese Ausgestaltung ist insbesondere dann vorteilhaft, wenn das Kontaktelement 36 als dünne Folie ausgebildet ist. Ein Anschlusskabel 46 erstreckt sich vom Anschluss 44 zu einer im Mantelrohr 24 an dessen dem Anschlussteil 14 zugewandten Ende angeordneten elektronischen Auswerteeinheit 48. Die elektronische Auswerteeinheit 48 weist einen Mikroprozessor 48a und weitere aktive Komponenten, wie beispielsweise Diskriminatoren, Bustreiber, Operationsverstärker oder Kapazitätsdioden, sowie passive elektrische Komponenten 48b auf, die zusammen mit der die Kapazität bildenden Elektrode 32 einen elektrischen Schwingkreis bilden, dessen Frequenz abhängig ist von der Kapazität und somit vom Abstand der Elektrode 32 zu einem zu bearbeitenden elektrisch leitfähigen Werkstück. Über eine Frequenzmessung und Auswertung mittels des Mikroprozessors 48a kann so der Abstand zum Werkstück geregelt werden.

Die Komponenten 48a, 48b der elektronischen Auswerteeinheit 48 sind jeweils auf mindestens einer Platine angeordnet, die mit dem Brennerkörper 12 in Berührung ist und somit durch die über die Gaszufuhrleitungen 20 der Brennerdüse 18 zugeleiteten Gase, in der Regel Acetylen oder Propan und Sauerstoff, gekühlt wird. Die passiven elektrischen Bauteile 48b, die weniger temperaturempfindlich sind als der Mikroprozessor 48a bzw. die aktiven Komponenten, sind näher an der Brennerspitze 16 angeordnet. Die Anordnung der elektronischen Auswerteeinheit 48 am Brennerkörper 12 erlaubt eine einfache Verbindung mit einer Abstandsregeleinrichtung mittels eines Standardsteckers 50, der im gezeigten Ausführungsbeispiel am Mantelrohr 24 angeordnet ist. Im Mantelrohr 24 sind zudem ein Sensor 52, der der Messung der Temperatur und/oder des Körperschalls im Brennerkörper 12 dient und somit einen Flammenrückschlag frühzeitig detektiert und dann die Gaszufuhr unterbricht, welcher den Schneidbrenner 10 zerstören könnte, als auch ein Hochspannungsgenerator 54 angeordnet, der dem Zünden des Schneidbrenners 10 dient. Im gezeigten Ausführungsbeispiel ist die gesamte Auswerteeinheit 48 im Mantelrohr 24 angeordnet. Es ist jedoch auch möglich, beispielsweise den Mikroprozessor 48a oberhalb des Mantelrohrs 24 am Brennerkörper 12 anzuordnen.

Im gezeigten Ausführungsbeispiel ist zwischen der Brennerdüse 18 und der Elektrode 32 im Bereich der Austrittsöffnung 30 ein Spalt angeordnet. Es ist jedoch auch möglich, den Spalt mittels eines isolierenden Materials zu füllen und insbesondere das Isolierelement 34 an der Brennerdüse 18 anliegend anzuordnen.

Zusammenfassend ist folgendes festzuhalten: Die Erfindung betrifft ein Schweiß- oder Schneidwerkzeug 10 zum Schweißen oder Schneiden von elektrisch leitfähigen Werkstücken mit einer an einer Werkzeugspitze 16 angeordneten Düse 18 für den Austritt eines Schweiß- oder Schneidstrahls und mit einer die Düse 18 wenigstens teilweise umschließenden, zur Werkzeugspitze 16 offenen Düsenkappe 28, die eine mit dem jeweiligen Werkstück eine Kapazität bildende Elektrode 32 und ein die Elektrode 32 gegenüber den weiteren Bauteilen des Werkzeugs elektrisch isolierendes Isolierelement 34 aufweist. Erfindungsgemäß ist vorgesehen, dass die Elektrode 32 aus einem ersten, elektrisch leitenden Keramikmaterial besteht und einstückig mit dem aus einem zweiten, elektrisch isolierenden Keramikmaterial bestehenden Isolierelement 34 ausgebildet ist.

## Patentansprüche

1. Schweiß- oder Schneidwerkzeug zum Schweißen oder Schneiden von elektrisch leitfähigen Werkstücken mit einer an einer Werkzeugspitze (16) angeordneten Düse (18) für den Austritt eines Schweiß- oder Schneidstrahls und mit einer die Düse (18) wenigstens teilweise umschließenden, zur Werkzeugspitze (16) offenen Düsenkappe (28), die eine mit dem jeweiligen Werkstück eine Kapazität bildende Elektrode (32) und ein die Elektrode (32) gegenüber den weiteren Bauteilen des Werkzeugs elektrisch isolierendes Isolierelement (34) aufweist, **dadurch gekennzeichnet, dass** die Elektrode (32) aus einem ersten, elektrisch leitenden Keramikmaterial besteht und einstückig mit dem aus einem zweiten, elektrisch isolierenden Keramikmaterial bestehenden Isolierelement (34) ausgebildet ist.

2. Werkzeug nach Anspruch 1, **dadurch gekennzeichnet, dass** das erste Keramikmaterial Titannitrid oder eine Titannitrid aufweisende Keramik ist.

3. Werkzeug nach Anspruch 1 oder 2, **dadurch gekennzeichnet, dass** das zweite Keramikmaterial Aluminiumoxid ist.

4. Werkzeug nach einem der vorangehenden Ansprüche, **dadurch gekennzeichnet, dass** die Düsenkappe (28) ein Kontaktelement (36) aufweist, das die Elektrode (32) mit einem elektrischen Anschluss (44) einer Auswerteelektronik (48) elektrisch leitend verbindet.

5. Werkzeug nach Anspruch 4, **dadurch gekennzeichnet, dass** das Kontaktelement (36) aus dem ersten Keramikmaterial besteht.

6. Werkzeug nach Anspruch 4 oder 5, **dadurch gekennzeichnet, dass** das Kontaktelement (36) als Folienstreifen mit einer Dicke von maximal 0,2 mm, vorzugsweise von maximal 0,1 mm, ausgebildet ist.

7. Werkzeug nach einem der Ansprüche 4 bis 6, **dadurch gekennzeichnet, dass** das Kontaktelement (36) in das Isolierelement (34) eingebettet ist.

8. Werkzeug nach einem der Ansprüche 4 bis 7, **dadurch gekennzeichnet, dass** sich das Kontaktelement (36) über einen quer zu einer Werkzeuglängsachse (40) verlaufenden Absatz (42) am Isolierelement (34) erstreckt und dort den Anschluss (44) der Auswerteelektronik (48) kontaktiert.

9. Werkzeug nach Anspruch 8, **dadurch gekennzeichnet, dass** das Kontaktelement (36) am Absatz (42) aus dem Isolierelement (34) herausragt und dort zur flächigen Anlage am Absatz (42) umgebogen ist.

10. Werkzeug nach einem der Ansprüche 4 bis 6, **dadurch gekennzeichnet, dass** das Kontaktelement (36) auf einer der Düse (18) zugewandten Innenfläche (38) des Isolierelements (34) angeordnet ist.

11. Werkzeug nach einem der vorangehenden Ansprüche, **dadurch gekennzeichnet, dass** die Elektrode (32) eine der Düse (18) abgewandten Außenfläche in Form einer Kugelkalotte aufweist mit einer mittig angeordneten Austrittsöffnung (30).

12. Werkzeug nach Anspruch 11, **dadurch gekennzeichnet, dass** die Elektrode (32) die Form eines Segments einer Kugelschale aufweist mit mittig angeordneter Austrittsöffnung (30).

13. Verfahren zur Herstellung einer Düsenkappe (28) für ein Schweiß- oder Schneidwerkzeug (10) nach einem der vorangehenden Ansprüche, **dadurch gekennzeichnet, dass** in einem Zweikomponentenkeramikspritzverfahren in einem ersten Verfahrensschritt der Rohstoff für das die Elektrode (32) bildende erste Keramikmaterial in eine Spritzform eingebracht wird, dass in einem zweiten Verfahrensschritt der Rohstoff für das das Isolierelement (34) bildende zweite Keramikmaterial in die Spritzform eingebracht wird und dass das so enthaltene halbfertige Produkt aus der Spritzform entnommen und einem Brennprozess zugeführt wird.

14. Verfahren zur Herstellung einer Düsenkappe (28) für ein Schweiß- oder Schneidwerkzeug (10) nach einem der Ansprüche 1 bis 12, **dadurch gekennzeichnet, dass** der Rohstoff für das die Elektrode (32) bildende Keramikmaterial in eine erste Spritzform und der Rohstoff für das das Isolierelement (34) bildende zweite Keramikmaterial in eine zweite Spritzform eingebracht wird und dass die so erhaltenen halbfertigen Produkte aus den Spritzformen entnommen und in einem gemeinsamen Brennprozess zusammengefügt werden.

15. Verfahren nach Anspruch 13 oder 14, **dadurch gekennzeichnet, dass** vordem Entnehmen des halbfertigen Produkts bzw. des halbfertigen Isolierelements (34) aus der Spritzform in einem weiteren Verfahrensschritt der Rohstoff für das das Kontaktelement (36) bildende erste Keramikmaterial in die betreffende Spritzform eingebracht wird.

## Claims

1. Welding or cutting tool for welding or cutting electrically conductive work pieces, having a nozzle (18) disposed at a tool tip (16), for exit of a welding or cutting jet, and having a nozzle cap (28) that encloses the nozzle (18), at least in part, and is open toward the tool tip (16), which cap has an electrode (32) that forms a capacitance with the respective work piece, and which cap has an insulating element (34) that electrically insulates the electrode (32) relative to the further components of the tool, **characterized in that** the electrode (32) consists of a first, electrically conductive ceramic material, and is configured in one piece with the insulating element (34), which consists of a second, electrically insulating ceramic material.

2. Tool according to claim 1, **characterized in that** the first ceramic material is titanium nitride or a ceramic having titanium nitride.

3. Tool according to claim 1 or 2, **characterized in that** the second ceramic material is aluminium oxide.

4. Tool according to one of the preceding claims, **characterized in that** the nozzle cap (28) has a contact element (36) that connects the electrode (32) with an electrical connector (44) of evaluation electronics (48), in electrically conductive manner.

5. Tool according to claim 4, **characterized in that** the contact element (36) consists of the first ceramic material.

6. Tool according to claim 4 or 5, **characterized in that** the contact element (36) is configured as a film strip having a thickness of maximally 0.2 mm, preferably of maximally 0.1 mm.

7. Tool according to one of claims 4 to 6, **characterized in that** the contact element (36) is embedded into the insulating element (34).

8. Tool according to one of claims 4 to 7, **characterized in that** the contact element (36) extends over a step (42) on the insulating element (34) that runs transverse to a longitudinal tool axis (40), and there contacts the connector (44) of the evaluation electronics (48).

9. Tool according to claim 8, **characterized in that** the contact element (36) projects from the insulating element (34) at the step (42), and there is bent to produce planar contact with the step (42).

10. Tool according to one of claims 4 to 6, **characterized in that** the contact element (36) is disposed on an inner surface (38) of the insulating element (34) that faces the nozzle (18).

11. Tool according to one of the preceding claims, **characterized in that** the electrode (32) has an outer surface, facing away from the nozzle (18), in the shape of a spherical calotte having an exit opening (30) disposed in the center.

12. Tool according to claim 11, **characterized in that** the electrode (32) has the shape of a segment of a spherical shell having an exit opening (30) disposed in the center.

13. Method for the production of a nozzle cap (28) for a welding or cutting tool (10) according to one of the preceding claims, **characterized in that** in a two-component ceramic injection-molding method, the raw material for the first ceramic material, which forms the electrode (32), is introduced into an injection mold in a first method step, and the raw material for the second ceramic material, which forms the insulating element (34), is introduced into the injection mold in a second method step, and that the semi-finished product obtained in this manner is then removed from the injection mold and conducted to a firing process.

14. Method for the production of a nozzle cap (28) for a welding or cutting tool (10) according to one of claims 1 to 12, **characterized in that** the raw material for the ceramic material that forms the electrode (32) is introduced into a first injection mold, and the raw material for the second ceramic material, which forms the insulating element (34), is introduced into a second injection mold, and that the semi-finished products obtained in this manner are removed from the injection molds and joined together in a common firing process.

15. Method according to claim 13 or 14, **characterized in that** the raw material for the first ceramic material that forms the contact element (36) is introduced into the respective injection mold before removal of the semi-finished product or of the semi-finished insulating element (34) from the injection mold, in a further method step.

## Revendications

1. Outil de soudage ou de découpage, destiné à souder ou découper des pièces électriquement conductrices, avec une buse (18), disposée à une pointe d'outil (16) et permettant la sortie d'un jet de soudage ou de découpage, et avec un capuchon de buse (28), entourant au moins partiellement la buse (18) et ouvert en direction de la pointe d'outil (16), capuchon qui présente une électrode (32), formant un condensateur avec la pièce respective, et un élément isolant (34), isolant électriquement l'électrode (32) par rapport aux autres composants de l'outil,
**caractérisé en ce que** l'électrode (32) est constituée d'un premier matériau céramique électriquement conducteur et est réalisée d'un seul tenant avec l'élément isolant (34) constitué d'un deuxième matériau céramique électriquement isolant.

2. Outil selon la revendication 1, **caractérisé en ce que** le premier matériau céramique est du nitrure de titane ou une céramique comportant du nitrure de titane.

3. Outil selon la revendication 1 ou 2, **caractérisé en ce que** le deuxième matériau céramique est de l'oxyde d'aluminium.

4. Outil selon l'une des revendications précédentes, **caractérisé en ce que** le capuchon de buse (28) présente un élément de contact (36) qui relie en conduction électrique l'électrode (32) à un connecteur électrique (44) d'une unité électronique d'évaluation (48).

5. Outil selon la revendication 4, **caractérisé en ce que** l'élément de contact (36) est constitué du premier matériau céramique.

6. Outil selon la revendication 4 ou 5, **caractérisé en ce que** l'élément de contact (36) est réalisé sous la forme d'une bande de film ayant une épaisseur de 0,2 mm au maximum, de préférence de 0,1 mm au maximum.

7. Outil selon l'une des revendications 4 à 6, **caractérisé en ce que** l'élément de contact (36) est incorporé dans l'élément isolant (34).

8. Outil selon l'une des revendications 4 à 7, **caractérisé en ce que** l'élément de contact (36) s'étend sur l'élément isolant (34) au-dessus d'un gradin (42) s'étendant transversalement à un axe longitudinal (40) de l'outil, et il y entre en contact avec le connecteur (44) de l'unité électronique d'évaluation (48).

9. Outil selon la revendication 8, **caractérisé en ce que** l'élément de contact (36) dépasse hors de l'élément isolant (34) au niveau du gradin (42), et il y est replié afin de s'appliquer à plat contre le gradin (42).

10. Outil selon l'une des revendications 4 à 6, **caractérisé en ce que** l'élément de contact (36) est disposé sur une face intérieure (38) de l'élément isolant (34) qui est tournée vers la buse (18).

11. Outil selon l'une des revendications précédentes, **caractérisé en ce que** l'électrode (32) possède une face extérieure opposée à la buse (18) et se présentant sous la forme d'une calotte sphérique avec une ouverture de sortie (30) disposée centralement.

12. Outil selon la revendication 11, **caractérisé en ce que** l'électrode (32) présente la forme d'un segment de coque sphérique avec une ouverture de sortie (30) disposée centralement.

13. Procédé de fabrication d'un capuchon de buse (28) pour un outil (10) de soudage ou de découpage selon l'une des revendications précédentes, **caractérisé en ce que**, dans un procédé de moulage par injection de céramique à deux composants, dans une première étape du procédé, la matière première pour le premier matériau céramique formant l'électrode (32) est introduite dans un moule d'injection, **en ce que**, dans une deuxième étape du procédé, la matière première pour le deuxième matériau céramique formant l'élément isolant (34) est introduite dans le moule d'injection, et **en ce que** le produit semi-fini ainsi obtenu est retiré du moule d'injection et apporté à un processus de cuisson.

14. Procédé de fabrication d'un capuchon de buse (28) pour un outil (10) de soudage ou de découpage selon l'une des revendications 1 à 12, **caractérisé en ce que** la matière première pour le premier matériau céramique formant l'électrode (32) est introduite dans un premier moule d'injection et la matière première pour le deuxième matériau céramique formant l'élément isolant (34) est introduite dans un deuxième moule d'injection, et **en ce que** les produits semi-finis ainsi obtenus sont retirés des moules d'injection et assemblés dans un processus de cuisson commun.

15. Procédé selon la revendication 13 ou 14, **caractérisé en ce que**, avant de retirer du moule d'injection le produit semi-fini ou respectivement l'élément isolant semi-fini (34), dans une étape supplémentaire du procédé, la matière première pour le premier matériau céramique formant l'élément de contact (36) est introduite dans le moule d'injection concerné.
